Europäisches Patentamt

(19) European Patent Office

Office européen des brevets

(11) Publication number: **0 283 502 B1**

(12) **EUROPEAN PATENT SPECIFICATION**

(45) Date of publication of patent specification :
03.04.91 Bulletin 91/14

(51) Int. Cl.⁵ : **B60K 17/28**

(21) Application number : 87906405.3

(22) Date of filing : 15.09.87

(86) International application number :
PCT/EP87/00521

(87) International publication number :
WO 88/02320 07.04.88 Gazette 88/08

(54) POWER TAKE-OFF DRIVE LINES.

(30) Priority : 23.09.86 GB 8622844

(43) Date of publication of application :
28.09.88 Bulletin 88/39

(45) Publication of the grant of the patent :
03.04.91 Bulletin 91/14

(84) Designated Contracting States :
DE FR GB IT SE

(56) References cited :
FR-A- 2 311 675
GB-A- 984 325
GB-A- 2 154 694

(73) Proprietor : MASSEY-FERGUSON S.A.
Avenue Blaise Pascal, B.P.307
F-60026 Beauvais (FR)
FR
Proprietor : MASSEY-FERGUSON SERVICES
N.V.
Abraham de Veerstraat 7A
Curaçao (AN)
DE GB IT SE

(72) Inventor : BEAUDOIN, Daniel
49, rue Général-de-Gaulle
F-60930 Bailleul-sur-Théraine (FR)

(74) Representative : Morrall, Roger et al
Varity Holdings Ltd., Patent Department
Stareton near Kenilworth Warwickshire CV8
2LJ (GB)

## Description

### Technical Field

This invention relates to power take-off (PTO) drive lines used on agricultural or industrial tractors to drive implements such as spinner broadcasters, mowers, balers etc. of the type disclosed in patent documents FR-A-2311675, GB-A-984325 and GB-A-2154694.

PTO drive lines conventionally include a clutch which allows drive to the implement to be disconnected. When the clutch is disengaged drag within the clutch may continue to result in unwanted rotation of the drive line output shaft. As will be appraciated this unwanted output shaft rotation due to clutch drag is of particular concern when the PTO clutch is oil cooled and thus has more internal drag.

Also in some installations the PTO drive line may for example, pass down the centre of a tractor transmission drive shaft and drag may occur between the concentric shafts again resulting in unwanted rotation of the PTO drive line output shaft.

### Disclosure of the Invention

It is an object of the present invention to provide an improved form of PTO drive line which mitigates the above problem of unwanted rotation of the drive line output shaft.

Thus according to the present invention there is provided A power take-off drive line including a drive shaft, a driven shaft, with which an implement may be connected, a disengageable power take-off clutch for connecting and disconnecting drive between the drive and driven shafts, bearing means for supporting the driven shaft for rotation, and brake means to inhibit any tendency of the driven shaft to rotate when the clutch is disengaged due to drag in the clutch or elsewhere in the drive line, said drive line being characterised in that said brake means includes an actuator which acts on the bearing means to increase the frictional resistance of the bearing means to provide the braking effect and in that actuation means is provided to enable an operator to apply the desired effect when required.

As will be appreciated, when the actuation means of the above drive line is operated the rotation of the driven shaft is inhibited thus mitigating the problem of unwanted drive shaft rotation. For example, if the drive line is powering a low inertia implement such as a spinner broadcaster, unwanted rotation of the output shaft would result in unwanted distribution of the material being spread by the broadcaster.

It will be appreciated that the brake means of the present invention is not intended to arrest any high inertia implement which may be connected to the driven shaft.

In a preferred arrangement the bearing means includes a roller bearing with rollers disposed between inner and outer cages and the actuator axially displaces one of the cages to increase the bearing friction to provide the desired braking effect.

Conveniently the actuator includes a fluid pressure operated piston for displacement of the cage.

The drive line clutch and actuation means may conveniently be controlled by a single actuation means having three positions, a first position in which the clutch is engaged, and the brake is disengaged, a second position in which the brake means is engaged and the clutch is disengaged and a third position in which both the clutch and brake means are disengaged.

The clutch and actuator means may both be fluid pressure operated, for example using solenoid operated fluid flow control valves.

### Description of the Drawings

One embodiment of the present invention will now be described, by way of example only, with reference to the accompanying drawings in which :

    Figure 1 is a diagrammatic, partly sectioned, side view of a PTO drive line embodying the present invention applied to an agriculture tractor, and

    Figure 2 is a sectional view of the braking arrangement of figure 1 on a larger scale.

### Best Mode of Carrying out the Invention

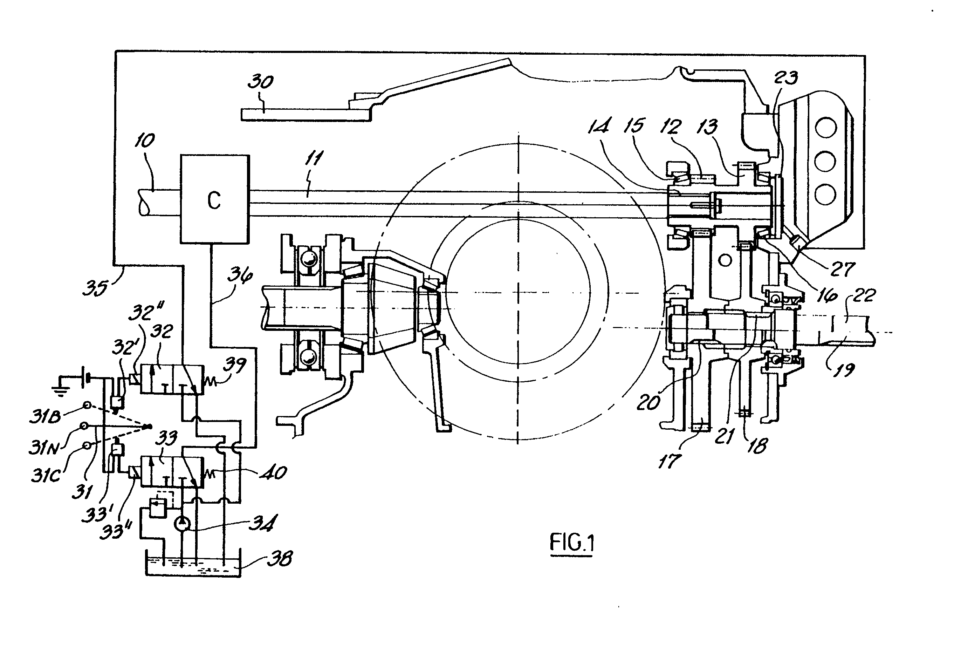

Refering to figure 1, the PTO drive line is disposed in a back axle housing 30 and comprises a drive shaft 10 driven directly from the tractor engine (not shown) and a driven shaft 11 which can be driven from the shaft 10 via an hydraulically engaged PTO clutch C which is oil-cooled. The supply of oil coolant to the clutch is controlled in the known manner so that coolant flow is disconnected when the clutch is disengaged. Since the constructional details of clutch C and its associated coolant system form no part of the present invention (and suitable forms will be well known to persons skilled in the art), no further details of the clutch C will be given in the present application.

Driven shaft 11 carries gear wheels 12 and 13 which are formed as a single casting which is splined onto the end of shaft 11 at 14. The rearward end of shaft 11 is supported from housing 30 via angled roller bearings 15 and 16. Gear wheels 12 and 13 mesh with gears 17 and 18 respectively. Gear 17 may be engaged via spline 20 with a PTO output shaft 19 (half of which is shown in Figure 1) while alternatively gear 18 may be engaged via spline 21 with an alternative PTO output shaft 22 (half of which is shown in Figure 1).

Thus, for example, by fitting PTO output shaft 19, drive from shaft 11 is obtained at say 540 r.p.m. via gears 12 and 17 and by fitting PTO output shaft 22 drive from shaft 11 is obtained via gears 13 and 18 at 1000 r.p.m. at the appropriate rated engine speed.

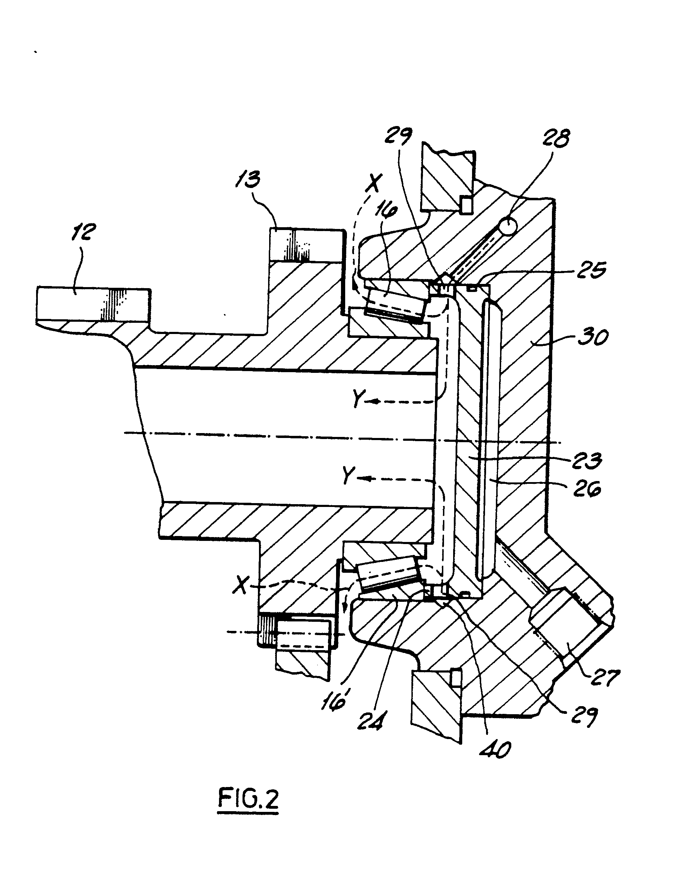

In accordance with the present invention a braking means is provided for shaft 11 to prevent rotation of this shaft when clutch C is disengaged. This braking arrangement is best seen in Figure 2 and comprises a piston 23 with a lip 24 which bears against the outer cage 16′ of bearing 16. Piston 23 is displaceable in a blind bore 25 by admitting pressurised fluid into chamber 26 via connection 27 in housing 30.

A lubrication passageway 28 is also provided in housing 30 which communicates a flow of lubricating oil to an annular groove 40 cut in blind bore 25. Piston lip 24 is proved with a series of drillings 29 through which the lubricating oil can lubricate bearing 16 (as shown by arrows X) or can travel down the centre of gearwheels 12 and 13 (as shown by arrows Y) to lubricate other bearings not shown.

Figure 1 shows one form of hydraulic circuit for operating clutch C and displacing the braking piston 23. This comprises a pivoting lever 31 which can be moved between three positions 31C, 31N, 31B to control two solenoid operated hydraulic valves 32 and 33 which receive pressured fluid from a pump 34 and direct this fluid to the brake piston 23 and clutch C via lines 35 and 36 respectively. The lever 31 when in positions 31B and 31C operates switches 32′ and 33′ respectively, which in turn energise solenoids 32″ and 33″ associated with valves 32 and 33.

With the lever 31 in its neutral position 31N shown in Figure 1, neither switch 32′ nor switch 33′ is operated and valves 32 and 33 are both in the positions shown in Figure 1 where both the brake chamber 26 and the actuator of clutch C are connected with sump 38.

If the tractor operator moves lever 31 to position 31C, switch 33′ is operated to energise solenoid 33″ and hence displace valve 33 against spring loading 40 to pressurise the actuator of clutch C via line 36 and thus engage clutch C.

If the tractor operator moves the lever 31 to the position 31B, switch 32′ is operated to energise solenoid 32″ and hence displace valve 32 against spring loading 39 to pressurise chamber 26 and hence move piston 23 to the left, as viewed in Figure 2, thus increasing the end loading on the outer cage 16′ of bearing 16 and hence generating sufficient friction within bearing 16 to overcome any drag in clutch C and prevent rotation of shaft 11 when clutch C disengaged.

It will be appreciated that the lever arrangement described above ensures that the braking piston 23 cannot be actuated unless the clutch C is disengaged, since when the lever 31 operates switch 32′ switch 33′ is not operated and clutch C is therefore disengaged being connected to sump 38.

The present invention thus provides a simple arrangement for overcoming the above described problem of PTO shaft rotation due to unwanted drag whether this drag occurs in the clutch or in a concentric drive shaft arrangement as referred to above.

## Claims

1. A power take-off drive line including a drive shaft (10), a driven shaft (11), with which an implement may be connected, a disengageable power take-off clutch (C) for connecting and disconnecting drive between the drive and driven shafts, bearing means (15, 16) for supporting the driven shaft for rotation, and brake means (16′, 23) to inhibit any tendency of the driven shaft to rotate when the clutch is disengaged due to drag in the clutch or elsewhere in the drive line, said drive line being characterised in that said brake means includes an actuator (23, 25) which acts on the bearing means (16) to increase the frictional resistance of the bearing means to provide the braking effect and in that actuation means (31) is provided to enable an operator to apply the desired effect when required.

2. A drive line according to claim 1 characterised in that the bearing means (16) comprises a roller bearing with rollers disposed between inner and outer cages and the actuator (23, 25) to axially displace one (16′) of the cages to increase bearing friction to provide the desired braking effect.

3. A drive line according to claim 2 characterised in that the actuator (23, 25) includes a fluid pressure operated piston (23) for displacement of the cage (16′).

4. A drive line according to claim 1 characterised in that the clutch (C) and actuator (16′, 23) are controlled by a single actuation means (31) having three positions, a first position (31C) in which the clutch is engaged and the brake is disengaged, a second position (31B) in which the brake means is engaged and the clutch is disengaged and a third position (31N) in which both the clutch (C) and brake means are disengaged.

5. A drive line according to Claim 1 characterised in that the clutch (C) and brake means (16′, 23) are both fluid pressure operated.

## Ansprüche

1. Zapfwellenantrieb mit einer Antriebswelle (10), einer mit einem Gerät verbindbaren Abtriebswelle (11), einer ausrückbaren Zapfwellenkupplung (C) zum Einkuppeln und Trennen der Antriebsverbindung zwischen Antriebs- und Abtriebswelle, die Abtriebswelle drehbar abstützenden Lagern (15, 16), sowie einer Bremsvorrichtung (16′, 23) zum Vermeiden des Drehbestrebens der Abtriebswelle auf Grund des im entkuppelten Zustand an der Kupplung oder an anderer Stelle im Antriebsstrang auftretenden Nachlaufs, dadurch gekennzeichnet, dass die Bremsvorrichtung ein Stellglied (23, 25) aufweist, welches derart auf das Lager (16) wirkt, dass zur Erzielung der Bremswirkung der Reibungswiderstand des Lagers erhöht wird, und dass eine Betätigungsvorrichtung (31) vorgesehen ist, über die der Bedienungsmann bei Bedarf die gewünschte Wirkung auslöst.

2. Zapfwellenantrieb nach Anspruch 1, dadurch gekennzeichnet, dass das Lager (16) aus einem Rollenlager besteht, dessen Rollen zwischen einem Innen- und einem Aussenring angeordnet sind und das Stellglied (23, 25) einen (16') der Ringe achsial verschiebt, wodurch die Lagerreibung erhöht und die gewünschte Bremswirkung erzielt wird.

3. Zapfwellenantrieb nach Anspruch 2, dadurch gekennzeichnet, dass das Stellglied (23, 25) einen durch Druckflüssigkeit betätigten Kolben (23) zur Verschiebung des Rings (16') aufweist.

4. Zapfwellenantrieb nach Anspruch 1, dadurch gekennzeichnet, dass die Kupplung (C) und das Stellglied (16', 23) durch nur eine Betätigungsvorrichtung (31) gesteuert werden, welche drei Stellungen aufweist, in deren erster (31C) die Kupplung eingerückt und die Bremse ausgerückt, in deren zweiter (31B) die Bremse eingerückt und die Kupplung ausgerückt ist, und in deren dritter Stellung (31N) Kupplung (C) und Bremse ausgerückt sind.

5. Zapfwellenantrieb nach Anspruch 1, dadurch gekennzeichnet, dass Kupplung (C) und Bremsvorrichtung (16', 23) druckflüssigkeitsbetätigt sind.

## Revendications

1. Transmission de prise de force comprenant un arbre d'entraînement (10), un arbre entraîné (11) auquel un outil peut être accouplé, un embrayage de prise de force déclenchable (C) pour connecter et déconnecter l'entraînement entre l'arbre d'entraînement et l'arbre entraîné, des moyens de portée (15, 16) pour supporter l'arbre entraîné en rotation, et des moyens de freinage (16', 23) pour empêcher toute tendance de l'arbre entraîné à la rotation, lorsque l'embrayage est débrayé, due à un frottement dans l'embrayage ou ailleurs dans la transmission, ladite transmission étant caractérisée en ce que les dits moyens de freinage comprennent un actionneur (23, 25) qui agit sur les moyens de portée (16) pour augmenter la résistance de frottement des moyens de portée de manière à engendrer l'effet de freinage, et en ce que des moyens de manoeuvre (31) sont prévus pour permettre à un opérateur d'exercer l'effet désiré lorsque c'est nécessaire.

2. Transmission suivant la revendication 1, caractérisée en ce que les moyens de portée (16) comprennent un palier à rouleaux, dont les rouleaux sont disposés entre des cages intérieure et extérieure, et l'actionneur (23, 25) pour déplacer axialement une (16') des cages pour augmenter le frottement du palier afin d'engendrer l'effet de freinage désiré.

3. Transmission suivant la revendication 2, caractérisée en ce que l'actionneur (23, 25) comprend un piston (23) commandé par pression de fluide pour le déplacement de la cage (16').

4. Transmission suivant la revendication 1, caractérisée en ce que l'embrayage (C) et l'actionneur (16', 23) sont commandés par un même dispositif de manoeuvre (31) comportant trois positions, à savoir une première position (31C) dans laquelle l'embrayage est enclenché et le frein est libéré, une deuxième position (31B) dans laquelle les moyens de freinage sont actionnés et l'embrayage est débrayé, et une troisième position (31N) dans laquelle à la fois l'embrayage (C) et les moyens de freinage sont désactivés.

5. Transmission suivant la revendication 1, caractérisée en ce que l'embrayage (C) et les moyens de freinage (16', 23) sont tous deux commandés par pression de fluide.

FIG.1

EP 0 283 502 B1

FIG.2